(19) Europäisches Patentamt
European Patent Office
Office européen des brevets

(11) **EP 1 876 669 A1**

(12) **EUROPEAN PATENT APPLICATION**

(43) Date of publication:
**09.01.2008 Bulletin 2008/02**

(51) Int Cl.:
***H01M 10/42*** *(2006.01)*

(21) Application number: **06116811.8**

(22) Date of filing: **07.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Apogee Power, Inc.**
**Campbell CA 95008 (US)**

(72) Inventors:
• **Tsai, Keh-Chi**
**Saratoga, CA 95070 (US)**

• **Lawson, James M.**
**Campbell, CA 95008 (US)**
• **Bell, Gregory R.**
**Campbell, CA 95008 (US)**
• **Peluger, Kurt**
**Campbell, CA 95008 (US)**

(74) Representative: **Viering, Jentschura & Partner**
**Postfach 22 14 43**
**80504 München (DE)**

(54) **Battery pack comprising rechargeable battery and a supercapacitor**

(57)  A composite battery set, including a metal-ceramic ruthenium-oxide ultracapacitor and a secondary lithium-ion battery, is provided. The composite battery set is electrically connected to an electrical device, which cuts down the total impedance by the metal-ceramic ruthenium-oxide ultracapacitor to increase the output power and the current. The composite battery set is also able to react a pulse rise time less than 5 ms, to speed up the signal react time of the electronic device. And the composite battery set further includes a protective circuit module (PCM) to protect the secondary lithium-ion battery so as to extend the service life and lifespan.

FIG. 3

**Description**

**BACKGROUND OF THE INVENTION**

**Field of Invention**

The present invention relates to a composite battery pack, and more particularly, to the composite battery set, which is composite of a metal-ceramic ruthenium-oxide ultracapacitor and a lithium-ion battery.

**Related Art**

In recent years, there are more and more kinds of electrical products with smaller, lighter and thinner size. Consuming trend toward this new growing electrical products results in the batteries with high power density being necessary.

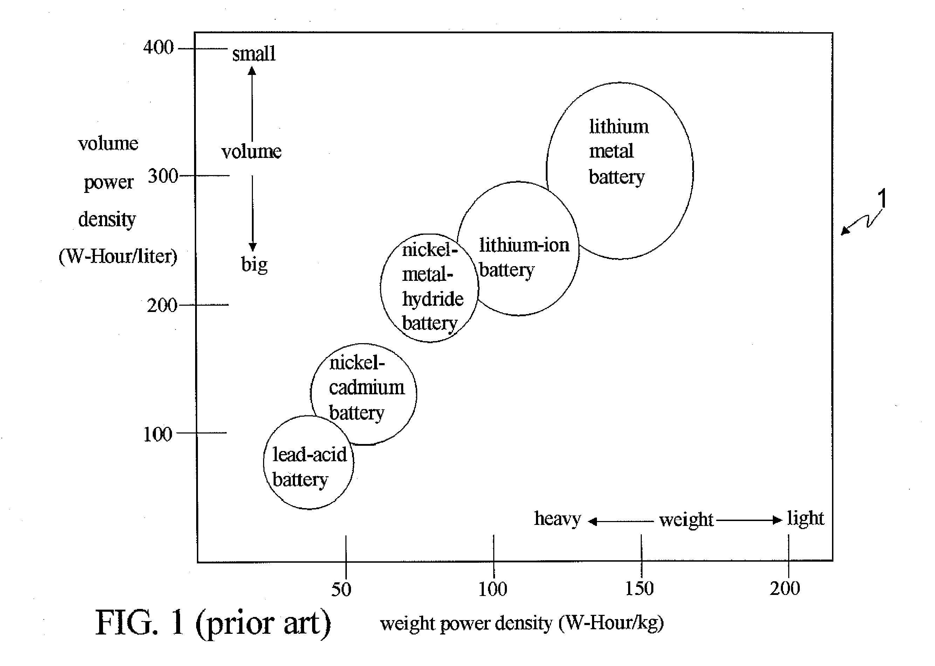

As shown in FIG.1, it is a contrast graph 1 among the power density of secondary batteries as known. The x-axis is weight power density (W-Hour/kg), the y-axis is volume power density (W-Hour/liter). The contrast graph 1 among the power densities of lead-acid battery, nickel-cadmium battery, nickel-metal-hydride battery, lithium-ion battery, and lithium metal battery are shown in the figure. In view of product design, the higher the power density is, the lighter or smaller size of the product is.

In view of the environment protection, the lead-acid battery and nickel-cadmium battery will be eliminated because of their heavy metal pollution among the conventional secondary batteries. The lithium metal battery also may be out of the date due to the short circuit caused by the needle like objects in the surface of the electrode, which are formed in the repeated charge and discharge processes, perforate the electrolyte and insulation layer. The power densities of the nickel-metal-hydride battery and lithium-ion battery are relatively higher than that of others, and furthermore, they have no memory effect, which exists in the nickel-cadmium battery. The lithium-ion battery is widely applied because its working voltage is about twice or three times of other secondary batteries. Consequently, industry and research institutes paid much attention to develop lithium-ion battery besides the nickel-metal-hydride battery.

Generally, portable electrical devices mainly take lithium-ion battery as the power source, such as cell phone, personal digital assistant (PDA), and digital camera, etc. The advantages of lithium-ion battery are small volume, light weight, high power density and no memory effect and so on, which can satisfy the requirements of minimization of the shape and charge convenience for the instruments.

However, when the lithium-ion battery is used in the cell phone, there existed some disadvantages as follows:

1. The operation time is too short. For example, the continuous talking time of a common cell phone is about 2 to 3 hours, while the operation time of a multifunction cell phone is less than a common one because of its high energy consuming issue.

2. The lithium-ion battery may lose some power after storing the power for a period of time, even if it does not discharge. Because of the existence of the above problem, the lifetime of the lithium-ion battery is about 1 and a half-year in average.

3. Continuous operation may lead to temperature increase and induce thermal runaway.

4. In the global system for mobile communications (GSM) based on time division multiple access (TDMA), the radio envelope is a certain periodic pulse waves with pulse width of 542.8 micro-second (ms) for each period of 576.9 ms. The emitter of cell phone must reach the requirement of power saturation within 28 ms of pulse rise time; however, the lithium-ion battery is unable to provide such repaid pulse rise time.

On the other hand, when the lithium-ion battery is applied in the digital camera, another problem of instant current occurs. Digital cameras usually have a function of flashlight and the use of flashlight needs large instant current supply, but common butteries store and make power from chemical reactions, which is unsuitable for high power supply in a short time. Furthermore, when the shutter catches a picture and transfers it from an analog image to a digital image, there must be enough power for transform circuit. Consequently, the power consuming of lithium-ion batteries for digital cameras are severe.

Conventional lithium-ion batteries include protection circuit module, which is applied to control the cut-off voltage and the surge current in the charge/discharge process, and to prevent short circuit and the damage of the batteries' cores. However, this module is just for prevention, but cannot solve the problems listed above.

According to the prior art, some of the disadvantages mentioned above can be improved by employing ultracapacitor complex lithium-ion batteries. The reason is that the characteristics of common capacitors are against the batteries: The power of the capacitor though it is smaller can be released instantly by physical changes, and it can be charged within several micro seconds. The capacity of the ultracapacitors is thousands times of that of common capacitors. They can release much more power instantly, which especially suitable for the device requiring the instant high power. Therefore, the research about ultracapacitor complex lithium-ion batteries has being developing.

However, conventional ultracapacitor is a kind of carbon-based ultracapacitor. Although the complex lithium-ion batteries improve the discharge performance of the pulse waves, the impedance is large due to the confinements of its material properties. It cannot contribute to decrease the total impedance of the batteries. Furthermore, the pulse rise time from the carbon-based ultracapacitor is about 60 micro-second, which cannot meet the requirements of the mobile communication system.

## SUMMARY OF THE INVENTION

According to one aspect of the present invention, a composite battery set with rapid pulse rise time is provided for an electrical device. The functions of the ultracapacitor in the battery set are to modulate the pulse wave current and charge/discharge rate, which can decrease the total impedance of the butteries and shorten pulse rise time and increase the power density.

The composite battery set of the present invention includes a battery and an ultracapacitor, etc. Wherein, the battery is a kind of secondary battery, especially the nickel-metal-hydride battery and lithium-ion batteries or lithium-polymer battery. The ultracapacitor is a kind of metal-ceramic ruthenium-oxide ultracapacitor, platinum-based ultracapacitor or gold-based ultracapacitor. Based on the characteristics of such ultracapacitors, the total impedance of the butteries can be decreased and the pulse rise time of the pulse waves, which may lead to stronger released power and more rapid reaction time to the signal of the electrical devices. So, they are especially suitable for the electrical tools, cell phones and digital cameras. If we can combine one of the ultracapacitors above with the batteries (e.g. the battery charges the ultracapacitor first. When the electrical devices need high instant power, it maybe released from the ultracapacitor instantly,) In this respect, the ultracapacitor has the buffer effect and increases the operation time and lifetime of the battery. The batteries in present invention include a protection circuit module, which can connect in series with the lithium-ion batteries or lithium-polymer batteries, control cutoff voltage and the surge current in the charge/discharge process, and to prevent short circuit and the damage of the batteries' cores.

Accordingly, it is an object of the present invention to provide a composite battery set which can keep out of the overheating state under long-playing operation.

Another object of the present invention is to provide a composite battery set, which can enhance the utilizing ratio of the battery capacity to extend the utilizing time of the battery.

A still further object of the present invention is to provide a composite battery set to increase the service life of the battery.

Another object of the present invention is to provide a composite battery set, which needs fewer batteries to achieve the same purpose of driving the motor device.

The disclosure to the contents and embodiments of present invention is to demonstrate the principles and sprite of present invention, and to provide the further explanation for the scope of the patent application of present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

## BRIEF DESCRIPTION OF THE DRAWINGS

The present invention will become more fully understood from the detailed description given hereinbelow illustration only, and thus is not limitative of the present invention, and wherein:

FIG. 1 is a contrast graph among the power densities of secondary batteries as known;

FIG.2 is one electronic device with composite battery set including the ultracapacitor; and

FIG.3 is another electronic device with composite battery set including the ultracapacitor.

**DETAILED DESCRIPTION OF THE INVENTION**

Hereinafter, the detailed characteristics and advantages of the present invention being provided in embodiments described below enable ordinary skill in the art for better understanding and implementing of the present invention. Any ordinary skill in the art can easily realize the purposes and advantages of the present invention based on the contents, scope and accompany drawings disclosed in description of the present invention.

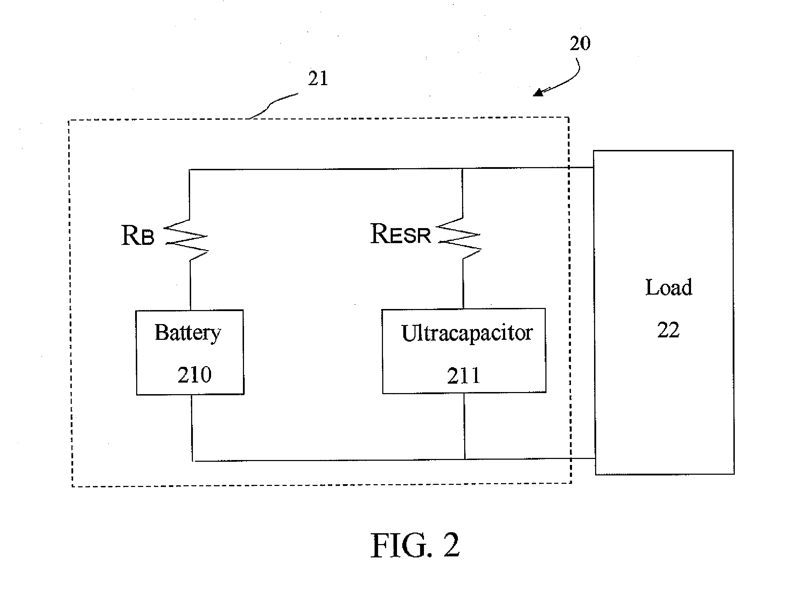

As shown in FIG. 2, it is an electronic device with composite battery set including the ultracapacitor. The electrical device 20 includes a battery set 21 and a load 22. The battery set 21 includes a battery 210, an inner resistance $R_B$ of the battery, an ultracapacitor 211 and equivalent series resistance (ESR) $R_{ESR}$ of the ultracapacitor 211 itself. The battery set 21 is connected in parallel to the load 22 and the battery set 21 acts on the load 22 as its power supply. But the number of battery set 21 is not limited to the description of FIG.2 and some battery modules can be connected together in series or in parallel. For example, the battery set 21 can be composed by a number of batteries and the inner resistance $R_B$ of the battery in series connection, and it also can composed by a number of ultracapacitor 211 and the equivalent series resistance $R_{ESR}$ of the ultracapacitor 211 itself.

In embodiments of the present invention, the battery 210 is a nickel-metal-hydride battery, lithium-ion battery, or lithium-polymer battery. The ultracapacitor 211 is a metal-ceramic ruthenium-oxide ultracapacitor, platinum-based ultracapacitor, or gold-based ultracapacitor. Based on the characteristics of low impedance and rapid reaction pulse rise time of such ultracapacitors, the total impedance of the butteries can be decreased and the pulse rise time of the pulse waves, which may lead to stronger released power and more rapid reaction time to the signal of the electrical devices. The battery set 22 is a combination of each kind of batteries 210 above and the ultracapacitor 211. The load 22 is an electrical device, which is such as digital electrical device, such as mobile phone, PDA or digital camera, or analogue electrical device such as electric dynamic device or remote control airplane.

As illustrative in FIG.2, the characteristics of the battery 210 is compensating with that of the ultracapacitors 211. The ultracapacitors 211 are used in the battery set that not only decreasing total impendent of the battery set 21 but also providing peak current for the load 22,overcoming the drawback of not generating instant high power of battery 210 which charge ultracapacitors 211 with electric power so as to make ultracapacitors 211 do work.

The load 22 is digital electrical device such as cell phone used in the 2nd generation mobile communication systems (GSM). The signal of the cell phone should have a periodic current pulse. In other words, it should produce a peak current with 0.55 ms pulse width and 1.34 ampere for each period of 4 ms. When used in the GPRS (General Packet Radio Service), which is one of the 2.5 generation mobile communication systems, the signal of the cell phone should produce a peak current with 0.6ms pulse width and 1.8 ampere for each period of 4ms. The signal of the cell phone must have the demand for higher peak current when used in UMTS (universal mobile telecommunications system), which is one of the 3rd generation mobile communication systems, or the 4th generation mobile communication systems which integrating wireless local area network.

If the load 22 is an electrical device, such as electric dynamic device, it also has the demand of higher peak current for driving the motor. Using the ultracapacitor 211 can take the mission of higher peak current from the battery 110 to the ultracapacitor 211. The battery set 21 comprising of the battery 210 and ultracapacitor 211 can solve the disadvantages, which the conventional technique can not solve as follows:

1. Since the ultracapacitor 211 used in the composite battery 210, the peak current flowing the battery 210 actually reduces much, and the heat effect produced by the current reduces much. At the same time, because the $R_{ESR}$ of the ultracapacitor 211 is very small, the total impedance of the battery set 21 also reduces, which bring more current on the load 22 relatively. And because the impedance of the ultracapacitor 211 itself is small, there will be not much more heat produced. So the battery set 21 can keep out of the overheating state under long-playing operation.

2. The ultracapacitor 211 can enhance the utilizing ratio of the battery capacity, and it can also enhance the volume power density and weight power density relatively, with the contrast with not using the ultracapacitor 211. When the voltage of the battery 210 falls to some specifically value, because of the long response time, the power produced when the voltage drops is lost. But after the ultracapacitor 211 is connected to the battery 210, it can shorten the charging and discharging response time. As a result, the consuming energy reduces much and it enhances the utilizing ratio of the capacity. So it also extends the utilizing time of the battery 210. The description about the specifically voltage values is decrypted as follows, for example, the specifically cut off voltage value in the GSM is 2.4 V, but the specifically cut off voltage value in the GPRS is 3.0 V.

3. Using the ultracapacitor 211 connected to the battery 210, even though it provide peak current to the load 22, the battery 210 has a moderate charging and discharging ratio. If the charging and discharging time of the battery 210 is improved, it means that the life of the battery 210 is extended. A group of the test data of this invention shows the efficacy. When the batter 210 is operated in the GPRS, the battery 210 charges and discharges 1700 times in the 18 months and its capacity only reduces 16%. So when the capacity reduces to the 20% of its total capacity, it can be estimated that it is equal for the battery 210 to charge and discharge 2700 times and the life of it extend to 6.8 years. The extending life of the batter not only improves the economic benefit but also is helpful for the environment protection.

4. Using the battery 210 with an ultracapacitor 211, it can make the pulse rise time less than 5 ms. It not only surpasses the 60ms pulse rise time using the a carbon-based ultracapacitor as the conventional technology, but also satisfies the 28ms standard at the mobile communication systems. The improvement of the function can increase the signal response of the digital electrical device. As a result it can improve the resolving power between the video signals and the audio signals.

5. When the battery 210 with ultracapacitor 211 is applied in analog electrical devices, it has the ability to reduce the number of the battery because it enhances the current. For example, some electrical devices only use series connection of 4 batteries 210 instead of ten nickel-metal-hydride batteries for the purpose of driving the motor of the device.

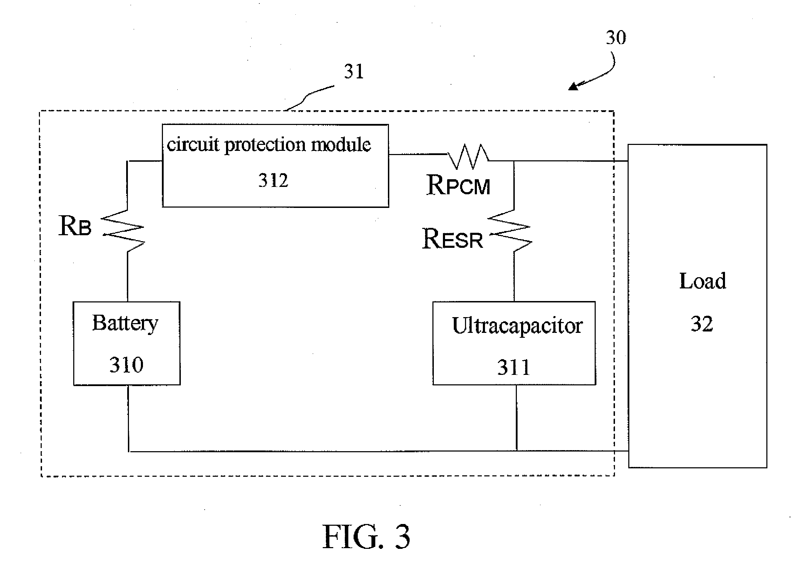

As shown in FIG 3, it is an another electronic device using the composite battery set with a ultracapacitor of this invitation. In FIG 3, the electrical device 30 is especially applied with the battery 310 which are lithium-ion battery or lithium-polymer battery. The only difference between the battery set 21 and the battery set 31 in the two embodiments separately is that the latter one has a circuit protection module 312 and the inner resistance $R_{PCM}$ of the circuit protection module 312.

The circuit in series is composed by the protect circuit module 312, the series-wound battery 310 and the inner resistance $R_B$ of the battery itself. The protect circuit module 312 is used to control the cut off voltage and the impulse current when charging and discharging. It can protect the load 32 from over high voltage or current's damage. And it can also prevent the core of the lithium-ion battery or lithium-polymer battery being damaged while the circuit is shortened.

Now the requirement of connecting the ultracapacitor 311 and the equivalent series resistance $R_{ESR}$ is considered on the other hand. In general, the total impedance R of the battery set 31 must be kept on 55 to 70 m$\Omega$. If the battery set 21 contains the circuit protecting module 312 and the circuit protecting module inner resistance $R_{PCM}$, but not contains the ultracapacitor 311 and the equivalent series resistance $R_{ESR}$, the impedance of the battery set 31 $R_B$ + $R_{PCM}$ is about 150 to 200 m$\Omega$. Therefore, the method of reducing the resistance of the battery set is limited to reduce the inner resistance of the battery and add a resistance in parallel connection. The former one is difficult to execute because it localizes on the manufacture technique of the battery 310. But the latter one can reduce the total impedance R of the battery set 31 by making the ultracapacitor 311 and the equivalent series resistance $R_{ESR}$ connect to each other in parallel connection, please referring to the equation (1) as follows:

$$R = \frac{(R_B + R_{PCM}) \times R_{ESR}}{R_B + R_{PCM} + R_{ESR}} \leq R_{ESR} \qquad (1)$$

As showing in the equation (1), the total impedance is less than or equal to the equivalent series resistance $R_{ESR}$. If the equivalent series resistance $R_{ESR}$ looks upon a variable, the equivalent series resistance $R_{ESR}$ determines the total impedance R. The equivalent series resistance $R_{ESR}$ can be set as the given value according to the given power of the load 32. In general, the range of the representative value is between 50 and 150m$\Omega$.

It is to be understood, however, that even though numerous characteristics and advantages of the present embodiments have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1.  A composite battery set, used in an electronic device, comprising:

    at least one battery, providing said electrical device with electric power; and
    at least one ultracapacitor, connected in parallel with said battery, to provide said electronic device with a pulse rise time which is less than 5 ms.

2.  The composite battery set according to claim 1, wherein said ultracapacitor is a metal-ceramic ruthenium-oxide ultracapacitor.

3.  The composite battery set according to claim 1, wherein said ultracapacitor is a platinum-based ultracapacitor.

4.  The composite battery set according to claim 1, wherein said ultracapacitor is a gold-based ultracapacitor.

5.  The composite battery set according to claim 1, wherein said battery is a lithium-ion battery.

6.  The composite battery set according to claim 1, wherein said battery is a lithium-polymer battery.

7.  The composite battery set according to claim 1, wherein said battery is a nickel-metal-hydride battery.

8.  The composite battery set according to claim 6, wherein said battery set includes at least one protective circuit module which connected in series with said lithium-polymer battery.

9.  A composite battery set, used in an electronic device, comprising:

    at least one lithium-ion battery, providing said electronic device with electric power;
    at least one protective circuit module, which connected in series with said lithium-ion battery to form a serial circuit set so as to avoid the damage of said lithium-ion battery; and
    at least one ultracapacitor, connected in series with said serial circuit set, used for providing said electronic device with a pulse rise time, which is less than 5 ms.

10. The composite battery set according to claim 9, wherein said ultracapacitor is a metal-ceramic ruthenium-oxide ultracapacitor.

11. The composite battery set according to claim 9, wherein said ultracapacitor is a platinum-based ultracapacitor.

12. The composite battery set according to claim 9, wherein said ultracapacitor is a gold-based ultracapacitor.

FIG. 1 (prior art)    weight power density (W-Hour/kg)

FIG. 2

FIG. 3

European Patent
Office

**EUROPEAN SEARCH REPORT**

Application Number

EP 06 11 6811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 587 250 A (THOMAS GEORGE [US] ET AL) 24 December 1996 (1996-12-24) * abstract * * column 1, line 13 - line 35 * * column 1, line 57 - line 63 * * column 2, line 27 - line 47 * * column 3, line 11 - line 29 * | 1,2,5-10 | INV. H01M10/42 |
| Y | * column 3, line 41 - line 46 * * column 3, line 53 - column 4, line 21 * * column 4, line 58 - column 5, line 1 * * column 5, line 19 - line 50 * * claim 4 * ----- | 5 | |
| X | WO 01/17054 A (EVEREADY BATTERY INC [US]) 8 March 2001 (2001-03-08) * page 1, line 5 - line 8 * * page 3, line 11 - line 15 * * page 4, line 2 - line 4 * * page 6, line 12 - line 16 * * page 8, line 16 - line 20 * * page 9, line 20 - line 24 * ----- | 1,5-9 | |
| | | | **TECHNICAL FIELDS SEARCHED (IPC)** |
| Y | US 5 872 698 A (BAI LIJUN [US] ET AL) 16 February 1999 (1999-02-16) * column 1, line 17 - line 32 * * column 2, line 34 - line 41 * ----- | 1-4,9-12 | H01M |
| Y | WO 01/39305 A (LITHIUM POWER TECHNOLOGIES INC [US]; MUNSHI M ZAFAR A [US]) 31 May 2001 (2001-05-31) * page 1, line 10 - line 12 * * page 2, line 11 - line 13 * * page 2, line 30 - line 31 * * page 3, line 10 - line 13 * * page 4, line 14 - line 28 * * page 18, line 1 - line 7 * * page 18, line 16 - line 17 * ----- -/-- | 1-4,9-12 | |

The present search report has been drawn up for all claims

| Place of search | Date of completion of the search | Examiner |
|---|---|---|
| Munich | 14 December 2006 | Horváth, László |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**European Patent Office**

## EUROPEAN SEARCH REPORT

Application Number

EP 06 11 6811

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 03/056684 A (ENERGY STORAGE SYSTEMS PTY LTD [AU]; TURNER GEOFF [AU]; SMITH TREVOR [ ]) 10 July 2003 (2003-07-10)<br>* page 1, line 15 - line 19 *<br>* page 1, line 28 - line 29 *<br>* page 5, line 5 - page 6, line 22 *<br>----- | 1,5,9 | |
| A | US 6 608 470 B1 (OGLESBEE JOHN WENDELL [US] ET AL) 19 August 2003 (2003-08-19)<br>* the whole document *<br>----- | 9 | |
| A | WO 99/39421 A (OGLESBEE JOHN W [US]; BURNS ARTHUR G [US]; MORE GEORGINA [US])<br>5 August 1999 (1999-08-05)<br>* the whole document *<br>----- | 9 | |
| A | US 2005/189912 A1 (JEON HYUNG-WOO [KR])<br>1 September 2005 (2005-09-01)<br>* the whole document *<br>----- | 9 | |
| | | | TECHNICAL FIELDS SEARCHED    (IPC) |

The present search report has been drawn up for all claims

| Place of search | Date of completion of the search | Examiner |
|---|---|---|
| Munich | 14 December 2006 | Horváth, László |

EPO FORM 1503 03.82 (P04C01)

## ANNEX TO THE EUROPEAN SEARCH REPORT
## ON EUROPEAN PATENT APPLICATION NO.

EP 06 11 6811

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2006

| Patent document cited in search report | | Publication date | Patent family member(s) | | Publication date |
|---|---|---|---|---|---|
| US 5587250 | A | 24-12-1996 | CA | 2231546 C | 30-05-2000 |
| | | | CN | 1198257 A | 04-11-1998 |
| | | | EP | 0858679 A1 | 19-08-1998 |
| | | | JP | 11512866 T | 02-11-1999 |
| | | | WO | 9712415 A1 | 03-04-1997 |
| WO 0117054 | A | 08-03-2001 | AU | 7099500 A | 26-03-2001 |
| | | | EP | 1218958 A1 | 03-07-2002 |
| | | | US | 2003129458 A1 | 10-07-2003 |
| US 5872698 | A | 16-02-1999 | WO | 9728293 A1 | 07-08-1997 |
| WO 0139305 | A | 31-05-2001 | AU | 2251201 A | 04-06-2001 |
| | | | EP | 1252672 A1 | 30-10-2002 |
| | | | JP | 2003515937 T | 07-05-2003 |
| | | | US | 2003026063 A1 | 06-02-2003 |
| | | | US | 6426863 B1 | 30-07-2002 |
| WO 03056684 | A | 10-07-2003 | US | 2004263127 A1 | 30-12-2004 |
| US 6608470 | B1 | 19-08-2003 | NONE | | |
| WO 9939421 | A | 05-08-1999 | CN | 1277741 A | 20-12-2000 |
| | | | EP | 0985242 A1 | 15-03-2000 |
| | | | EP | 0988685 A1 | 29-03-2000 |
| | | | JP | 2001520858 T | 30-10-2001 |
| | | | WO | 9939400 A1 | 05-08-1999 |
| US 2005189912 | A1 | 01-09-2005 | CN | 1661842 A | 31-08-2005 |
| | | | JP | 2005243629 A | 08-09-2005 |
| | | | KR | 20050088008 A | 01-09-2005 |

EPO FORM P0459

For more details about this annex : see Official Journal of the European Patent Office, No. 12/82